# EUROPÄISCHE PATENTSCHRIFT

(11) **EP 2 704 933 B1**
(45) Veröffentlichungstag und Bekanntmachung des Hinweises auf die Patenterteilung: **10.10.2018**
(21) Anmeldenummer: 12721460.9
(22) Anmeldetag: 04.05.2012
(51) Int. Cl.: B60T 11/16, B60T 11/20, B60T 11/232

(54) **HAUPTZYLINDER, INSBESONDERE FÜR EIN GEREGELTES BREMSSYSTEM**
MASTER CYLINDER, IN PARTICULAR FOR A CONTROLLED BRAKE SYSTEM
MAÎTRE-CYLINDRE EN PARTICULIER POUR UN SYSTÈME DE FREINAGE COMMANDÉ

(30) Priorität: 05.05.2011 DE 102011075359
(43) Veröffentlichungstag der Anmeldung: 12.03.2014
(73) Patentinhaber: Continental Teves AG & Co. OHG, 60488 Frankfurt am Main (DE)
(72) Erfinder: KÖNIG, Harald, 61239 Ober-Mörlen (DE); DROTT, Peter, 65936 Frankfurt (DE); JUNGMANN, Udo, 64546 Mörfelden (DE); BISCHOFF, Andreas, 61118 Bad Vilbel (DE)
(86) Internationale Anmeldenummer: PCT/EP2012/058280
(87) Internationale Veröffentlichungsnummer: WO 2012/150347

(56) Entgegenhaltungen:
- EP-A1- 1 162 119
- EP-A1- 1 889 767
- DE-A1- 19 907 298
- DE-A1-102006 058 976

## Beschreibung

Die Erfindung betrifft einen Hauptzylinder, insbesondere für ein geregeltes Bremssystem, mit wenigstens einem, in einem Gehäuse verschiebbaren Kolben, der mittels eines, in einer Ringnut des Gehäuses angeordneten Dichtelementes gegenüber einem Druckraum abgedichtet ist, welcher durch im Kolben ausgebildete Steuerdurchlässe mit einem drucklosen Nachlaufraum verbindbar ist.

Ein derartiger Hauptzylinder ist beispielsweise aus der DE 10 2004 057 137 A1 bekannt, wobei die Steuerdurchlässe als radiale Querbohrungen mit kleinem Querschnitt vorgesehen sind und auf einer Innenseite im Bereich der Querbohrungen eine umlaufende Innennut ausgebildet ist, um den Leerweg des Hauptzylinders möglichst klein zu halten und gleichzeitig den Drosselwiderstand durch Reduzieren der Länge der Querbohrungen zu verringern.

Bei der Verwendung in einem geregelten Bremssystem, wie beispielsweise ein Bremssystem mit Antriebsschlupfregelung (ASR) oder Elektronischem-Stabilitäts-Programm (ESP), wird im Falle eines Regeleingriffes von einer Pumpe Druckmittel von einem Druckmittelbehälter über den Hauptzylinder nachgesaugt. Nachteilig hierbei ist, dass der kleine Querschnitt der Querbohrungen einen zu großen Durchflusswiderstand erzeugt und das benötigte Druckmittel der Pumpe nicht schnell genug bereitgestellt werden kann.

Um den Durchflusswiderstand zu verringern, besteht bei den bekannten Hauptzylindern die Möglichkeit, eine größere Anzahl von Querbohrungen vorzusehen oder die Querbohrungen hinsichtlich ihres Durchmessers zu optimieren. Als nachteilig bei der erstgenannten Lösung stellt sich jedoch heraus, dass der Durchflusswiderstand zugunsten der Stabilität des Kolbens verringert wird und ferner das Vorsehen von vielen kleinen Querbohrungen wirtschaftlich ungünstig ist. Die zweite Lösung hat den Nachteil, dass sich durch Verschieben der steuernden Bohrungsseitenkante der Leerweg des Hauptzylinders vergrößert.

Um diese Nachteile zu vermeiden, schlägt die DE 10 2009 054 695 A1 vor, dass der Kolben aus Kunststoff vorgesehen ist und die Steuerdurchlässe des Kolbens eine parallel zu einer Kolbenstirnseite ausgebildete Steuerkante aufweisen, wobei die Steuerdurchlässe als axiale Nuten an einer Außenseite des Kolbens ausgebildet sind. Hierdurch ist es möglich, bei gleichem Schließweg den Durchflussquerschnitt der Steuerdurchlässe zu vergrößern, so dass das Dynamikverhalten bei Regeleingriffen verbessert werden kann. Die axialen Nuten bieten den Vorteil, dass eine definierte Führung des Dichtelements auf der Außenseite des Kolbens gewährleistet ist.

Ferner ist aus EP 1 162 119 A1 ein Hydraulikzylinderkolben mit einer separat herstellbaren Nachlaufeinrichtung bekannt, wobei die Nachlaufeinrichtung als ein Ringteil ausgebildet ist, mehrere axiale Ausgleichsnuten aufweist und spielfrei mit dem Hauptteil des Kolbens verbunden ist.

Der Erfindung liegt daher die Aufgabe zugrunde, einen anderen, in Hinblick auf die genannten Nachteile des bekannten Hauptzylinders verbesserten Hauptzylinder bereitzustellen.

Erfindungsgemäß wird die Aufgabe durch einen Hauptzylinder mit den Merkmalen nach dem unabhängigen Anspruch 1 gelöst. Unteransprüche zusammen mit den Figuren und Figurenbeschreibungen geben weitere erfindungsgemäße Ausführungsformen und Weiterbildungen an.

Gemäß einer vorteilhaften Ausführungsform der Erfindung ist das ringförmige Steuerelement in einer Außennut des Grundkörpers angeordnet. Diese kann in einfacher Weise bei der Herstellung in den Grundkörper eingebracht werden, wodurch die Herstellung des Grundkörpers wesentlich vereinfacht wird.

Gemäß einer vorteilhaften Weiterbildung der Erfindung sind die Steuerdurchlässe als axiale Nuten an einer Außenseite des Steuerelementes vorgesehen. Die axialen Nuten bieten den Vorteil, dass eine definierte Führung des Dichtelements auf der Außenseite des Kolbens gewährleistet ist.

Eine alternative vorteilhafte Ausführungsform der Erfindung sieht vor, dass das Steuerelement als Wellenring ausgebildet ist.

Eine andere alternative vorteilhafte Ausführungsform der Erfindung sieht vor, dass die Steuerdurchlässe als Zwischenräume zwischen Rippen an einer Innenseite des Steuerelementes vorgesehen sind, wobei die Rippen an der der Steuerkante zugewandten Seite des Steuerelementes in axialer Richtung über das Steuerelement überstehen.

Vorzugsweise ist der Grundkörper als Dreh- oder Fließpressteil vorgesehen.

Ein hinsichtlich des Gewichtes optimierter Kolben kann dadurch erreicht werden, wenn der Grundkörper aus Aluminium ausgebildet ist.

Die Montage kann einfach durchgeführt werden, wenn das Steuerelement gemäß einer vorteilhaften Ausführungsform der Erfindung als reversibel verformbares Formteil vorgesehen ist, welches durch Aufweiten auf dem Grundkörper montierbar ist.

Vorzugsweise ist das Steuerelement aus Kunststoff ausgebildet, wodurch eine kostengünstige Herstellung erzielt werden kann.

Gemäß einer alternativen Ausführungsform der Erfindung kann das Steuerelement aus federndem Blech ausgebildet sein.

Eine besonders vorteilhafte Ausführungsform der Erfindung sieht vor, dass die Außennut im Bereich eines reduzierten Durchmessers des Grundkörpers vorgesehen ist.

Als Vorteil des nun anfänglich größeren Spalts zwischen dem Kolben und dem Gehäuse ist sowohl ein geringerer Durchflusswiderstand für Fahrdynamik-Regelungssysteme als auch ein besseres Nachströmen bei Volumenmangel anzuführen.

Weitere Merkmale, Vorteile und Anwendungsmöglichkeiten der Erfindung gehen aus den Unteransprüchen und der nachfolgenden Beschreibung von Ausführungsbeispielen sowie anhand der Zeichnung hervor.

Es zeigt jeweils stark schematisiert:
- Figur 1: einen bekannten Hauptzylinder im Längsschnitt;
- Figur 2: einen Kolben eines ersten Ausführungsbeispiels eines erfindungsgemäßen Hauptzylinders in räumlicher Darstellung;
- Figur 3: einen vergrößerten Ausschnitt X des Kolbens gemäß
- Figur 4: ein Steuerelement des erfindungsgemäßen Hauptzylinders gemäß Fig. 2 und 3 in räumlicher Darstellung;
- Figur 5: einen Ausschnitt des Kolbens gemäß Fig. 2 mit montiertem Steuerelement in räumlicher Darstellung;
- Figur 6: ein Steuerelement eines zweiten Ausführungsbeispiels eines erfindungsgemäßen Hauptzylinders in räumlicher Darstellung;
- Figur 7: einen Kolben mit montiertem Steuerelement gemäß Fig. 6 in räumlicher Darstellung;
- Figur 8: einen Ausschnitt eines Kolben eines dritten Ausführungsbeispiels eines erfindungsgemäßen Hauptzylinders in räumlicher Darstellung;
- Figur 9: einen weiteren Ausschnitt des Kolbens gemäß Fig. 8;
- Figur 10: ein Steuerelement des erfindungsgemäßen Hauptzylinders gemäß Fig. 8 und 9 in räumlicher Darstellung und
- Figur 11: einen Ausschnitt des Steuerelementes gemäß Fig. 10 in räumlicher Darstellung.

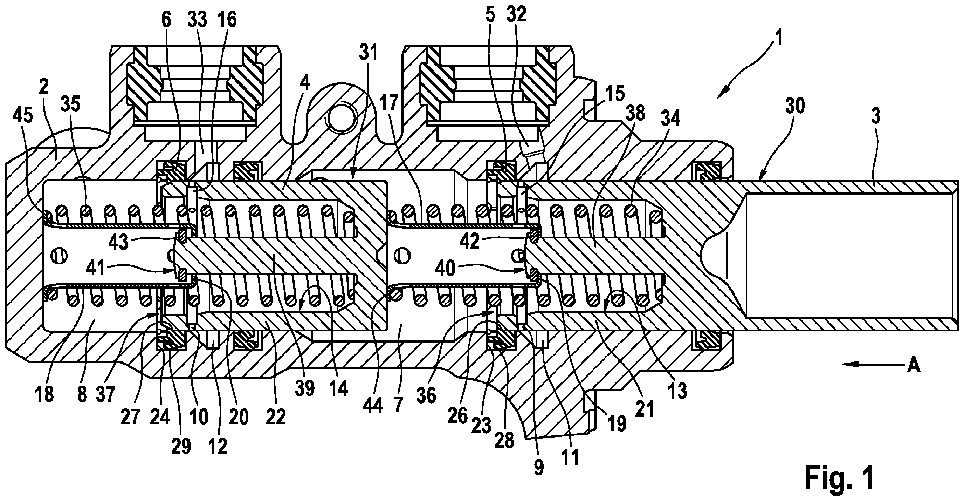

Fig. 1 zeigt im Längsschnitt einen bekannten Hauptzylinder 1, welcher beispielsweise in einem geregelten Bremssystem mit Antischlupfregelung (ASR) und/oder Elektronischem-Stabilitäts-Programm (ESP) Verwendung findet und in Plunger- und Tandembauweise ausgebildet ist.

Der Hauptzylinder 1 umfasst einen ersten und einen zweiten, in einem Gehäuse 2 verschiebbaren Kolben 3,4, wobei in einer Ringnut 23,24 des Gehäuses 2 ein kreisringförmiges Dichtelement 5,6 mit einer dynamisch beaufschlagten Innendichtlippe 26,27 sowie mit einer statisch beaufschlagten Außendichtlippe 28,29 vorgesehen ist. Die dynamisch beaufschlagte Innendichtlippe 26,27 liegt mit einer ersten Dichtfläche an dem Kolben 3,4 an und die statisch beaufschlagte Außendichtlippe 28,29 liegt mit einer zweiten Dichtfläche an einem Boden der Ringnut 23,24 an. Eine Außenseite 30,31 der Kolben 3,4 dient als Führungsfläche.

Ein erster und ein zweiter Druckraum 7,8 sind in einem, in Fig. 1 dargestellten, unbetätigten Zustand des Hauptzylinders 1 über einen Druckmittelkanal 32,33 und einen Nachlaufraum 11,12 im Gehäuse 2 sowie über als Querbohrungen ausgestaltete Steuerdurchlässe 9,10 in einer topfförmigen Wandung 21,22, die an einer Seite 36,37 des ersten und des zweiten Kolbens 3,4 vorgesehen ist, mit einem nicht dargestellten, drucklosen Druckmittelbehälter verbunden. Je nach Ausführung des Hauptzylinders 1 weist dieser zwischen vier und vierundzwanzig Querbohrungen 9,10 am Umfang des Kolbens 3,4 auf. Die Kolben 3,4 sind dabei mittels Druckfedern 34,35 vorgespannt.

Die Druckfeder 34,35 ist zumindest teilweise innerhalb der topfförmigen Wandung 21,22 angeordnet. Die Wandung 21,22 wird mittig von einem zentrischen Zapfen 38,39 durchragt, der vor seinem axialen Austritt aus der Wandung 21,22 endet. Dieses Ende 40,41 ist mit einem Anschlag 42,43 für eine Hülse 17,18 versehen, der mit einem Kragen 19,20 derart zusammenwirkt, dass die Hülse 17,18 relativ zu dem Zapfen 38,39 begrenzt teleskopierbar ist. Mit anderen Worten wird die Hülse 17,18 mit der Druckfeder 34,35 bei Betätigung in das Kolbeninnere gedrängt. Wie zu ersehen ist, handelt es sich bei dem Anschlag 42,43 vorzugsweise um eine, an den Zapfen 38,39 angenietete - insbesondere Taumelvernietete - Ringscheibe. Das anderseitige Ende der Hülse 17,18 verfügt über den tellerartigen Kragen 44,45 zur Anlage der Druckfeder 34,35.

Zur Betätigung des Hauptzylinders 1 wird der erste Kolben 3 in Betätigungsrichtung A verschoben. Dabei wird die Bewegung des ersten Kolbens 3 über die Druckfeder 34 auf den zweiten Kolben 4 übertragen. Sobald sich die Querbohrungen 9,10 im Bereich der Dichtelemente 5,6 befinden, also die steuernde Bohrungs-Seitenkante überfahren ist, ist der sogenannte Leerweg des Hauptzylinders 1 durchfahren, da kein Druckmittel mehr von den Nachlaufräumen 11,12 durch die Querbohrungen 9,10 in die Druckräume 7,8 gelangen kann. Die Verbindung der Druckräume 7,8 mit dem Druckmittelbehälter ist unterbrochen und in den Druckräumen 7,8 wird Druck aufgebaut.

Die zwei hintereinander angeordneten Kolben 3,4 des Hauptzylinders 1 sind in ihrem Aufbau und ihrer Funktionsweise nahezu identisch, so dass nur der erste Kolben 3 weiter beschrieben wird.

Bei einem ASR- oder ESP-Eingriff kann es notwendig sein, bei unbetätigtem oder betätigtem Kolben 3 Druckmittel aus dem Druckmittelbehälter über den Druckraum 7 in Richtung Radbremsen nachzusaugen, was vorzugsweise mittels einer Pumpe erfolgt, deren Eingang wahlweise mit den Druckräumen 7,8 des Hauptzylinders 1 oder mit den Radbremsen verbindbar ist, um in Richtung Radbremsen oder in Richtung Hauptzylinder 1 zu fördern (Rückförderprinzip). Hierzu wird bei einem ASR oder ESP-Eingriff in unbetätigtem Zustand des Hauptzylinders 1 das Druckmittel aus dem Druckmittelbehälter über den Druckmittelkanal 32, den Nachlaufraum 11, die Querbohrungen 9 und den Druckraum 7 nachgesaugt. Bei einem ESP-Eingriff in betätigtem Zustand des Hauptzylinders 1 erfolgt die Nachsaugung zusätzlich durch Überströmen der Außendichtlippe 28 des Dichtelementes 5, indem diese durch den Saugdruck in Richtung Innendichtlippe 26 umklappt und hierdurch die Dichtfläche der Außendichtlippe 28 nicht mehr am Boden der Ringnut 23 anliegt. Um der Pumpe bei einem ASR- oder ESP-Eingriff insbesondere in unbetätigter Stellung des Hauptzylinders 1 schnell genügend Druckmittel zur Verfügung zu stellen, ist es notwendig, den Durchflusswiderstand der Querbohrungen 9 so gering wie möglich zu halten, wobei jedoch auch der Leerweg des Hauptzylinders 1 möglichst klein gehalten werden soll.

Im Bereich der Querbohrungen 9,10 ist jeweils eine radiale, umlaufende Innennut 15,16 auf einer Innenseite 13,14 des Kolbens 3,4 vorgesehen, welche die Länge der Querbohrungen 9,10 verkürzt. Dadurch soll der Drosselwiderstand verringert werden. Als nachteilig stellt sich jedoch zum einen der fertigungstechnische Herstellungsaufwand der Innennut 15,16 dar. Zum anderen ist der Durchflusswiderstand der Querbohrungen 9,10 unmittelbar vom Bohrungsdurchmesser abhängig, so dass die Innennut 15,16 keine Verringerung des Durchflusswiderstandes ermöglicht. Ferner kann die Stabilität des Kolbens 3,4 bei vielen vorgesehenen Querbohrung 9,10 negativ beeinflusst werden.

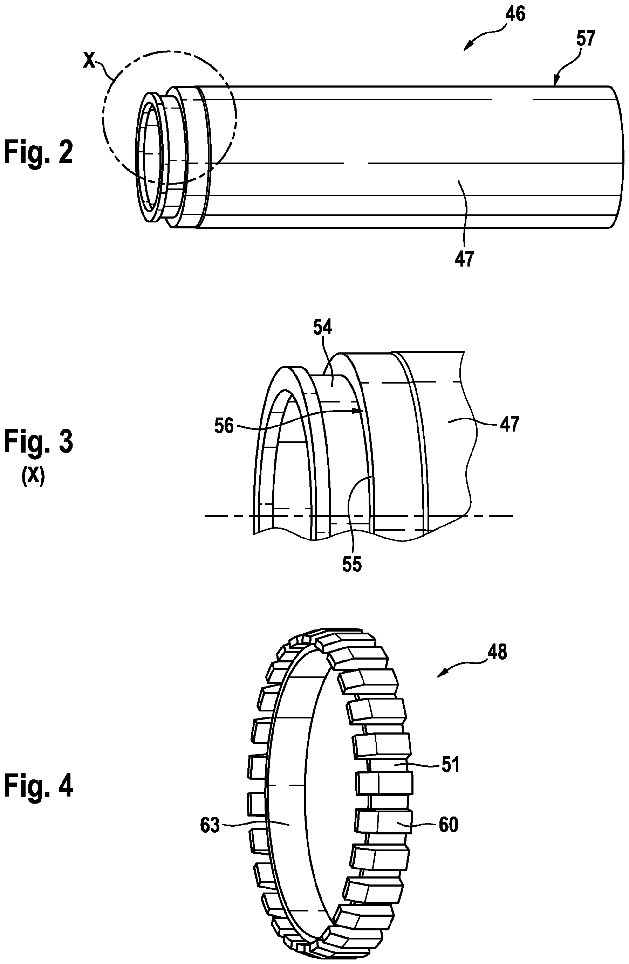

Den Fig. 2 bis 11 sind Ausführungsbeispiele eines erfindungsgemäßen Hauptzylinders zu entnehmen, welcher sich zum bekannten Hauptzylinder gemäß Fig. 1 grundsätzlich in Funktion und Aufbau nicht unterscheidet. Lediglich die Kolben sind im Unterschied zum bekannten Hauptzylinder gemäß Fig. 1 modifiziert, so dass auf eine wiederholte Beschreibung der Funktion und des Aufbaus verzichtet werden kann und im nachfolgenden nur ein dem vorstehend beschriebenen Kolben 3 entsprechender Kolben 46 des erfindungsgemäßen Hauptzylinders beschrieben wird. Gleiche Bauteile sind mit gleichen Bezugszeichen gekennzeichnet.

Um den bekannten Hauptzylinder hinsichtlich Stabilität, Durchflussquerschnitt und Herstellungskosten zu verbessern, sind die Kolben 46 der nachstehend beschriebenen Ausführungsbeispiel wenigstens zweiteilig mit einem Grundkörper 47 und einem ringförmigen Steuerelement 48,49,50 ausgebildet und die Steuerdurchlässe 51,52,53 sind in dem Steuerelement 48,49,50 vorgesehen. Hieraus ergibt sich bei allen Ausführungsbeispielen der Vorteil, dass das nicht druckbelastete Steuerelement 48,49,50 sehr filigran und dünnwandig ausgeführt werden kann, ohne die Stabilität des Grundkörpers 47 zu beeinflussen. Durch die erfindungsgemäße Ausgestaltung des Kolbens 46 werden somit der Druckbereich und der Nachsaugebereich des Kolbens 46 von einander getrennt.

Der Grundkörper 47, welcher beispielsweise als Dreh- oder Fließpressteil aus Aluminium vorgesehen ist, um einen hinsichtlich des Gewichts optimierten Kolben 46 zu erhalten, ist bei allen Ausführungsbeispielen mit einer Außennut 54 ausgestaltet, in welcher das ringförmige Steuerelement 48,49,50 angeordnet ist. Die Außennut 54 kann in einfacher Weise bei der Herstellung in den Grundkörper 47 eingebracht werden, wodurch die Herstellung des Grundkörpers wesentlich vereinfacht wird.

Um die Montage zu vereinfachen, ist das Steuerelement 48,49,50 bei allen Ausführungsformen ein reversibel verformbares Formteil, welches durch Aufweiten auf dem Grundkörper 47 montierbar ist.

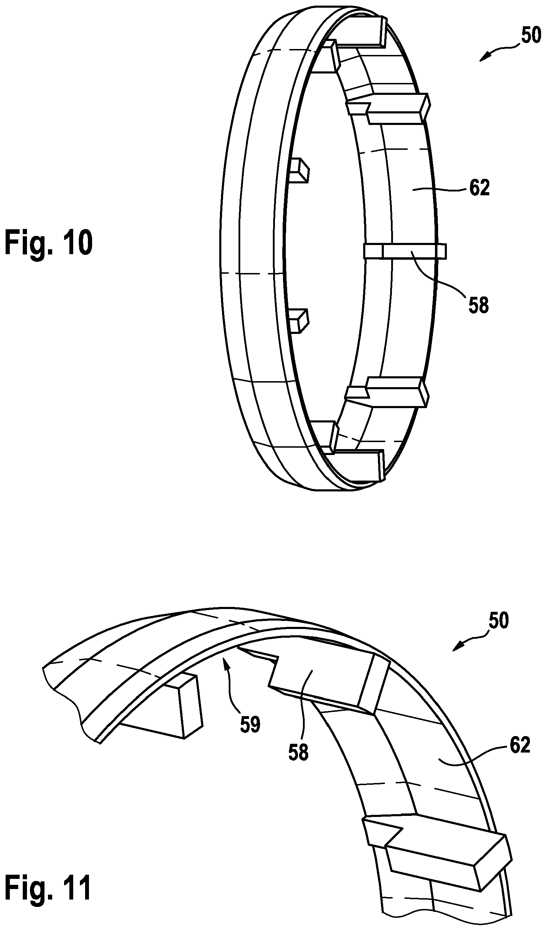

Das in den Fig. 4 und 10 räumlich dargestellte Steuerelement 48,50 des ersten und des dritten Ausführungsbeispiels ist aus Kunststoff ausgebildet, wodurch eine kostengünstige Herstellung erzielt werden kann.

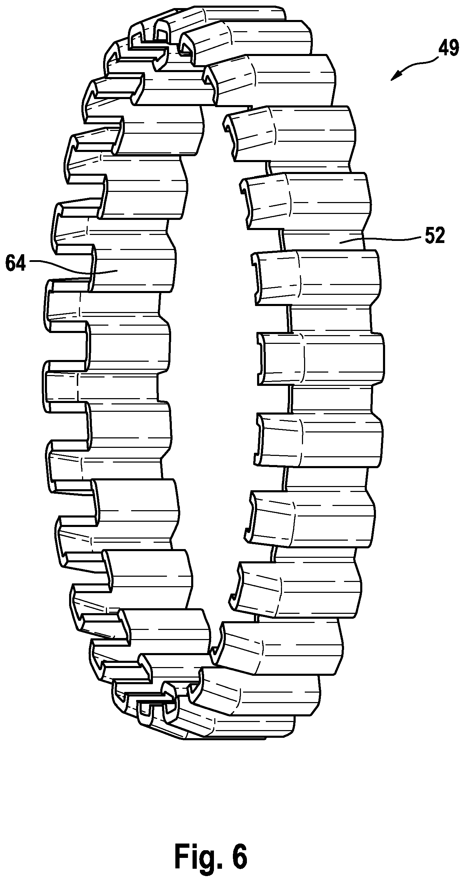

Alternativ ist das in Fig. 6 gezeigte Steuerelement 49 des zweiten Ausführungsbeispiels als Wellenring aus federndem Blech ausgebildet.

Um bei gleichem Schließweg den Durchflussquerschnitt der Steuerdurchlässe 51,52,53 zu vergrößern, so dass das Dynamikverhalten bei Regeleingriffen verbessert werden kann, weisen die Steuerdurchlässe 51,52,53 eine parallel zu einer Kolbenstirnseite ausgebildete Steuerkante 55 auf, wobei die Steuerkante 55 an dem Grundkörper 47 durch eine Seitenwand 56 der Außennut 54 und eine Außenseite 57 des Grundkörpers 47 gebildet wird, wie beispielsweise aus Fig.3 hervorgeht.

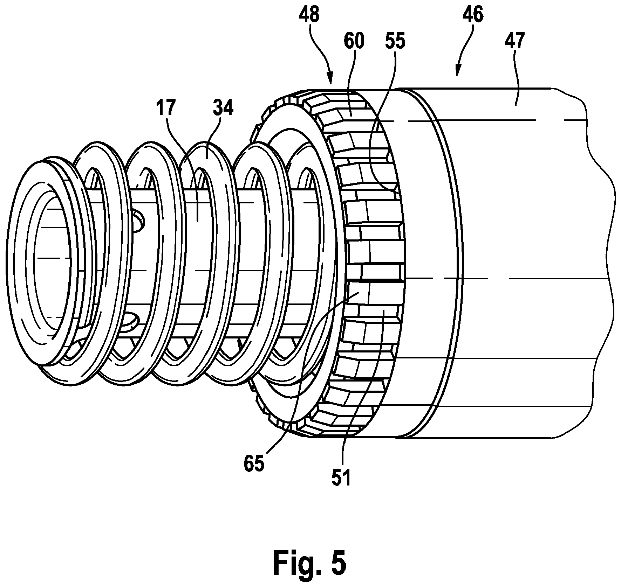

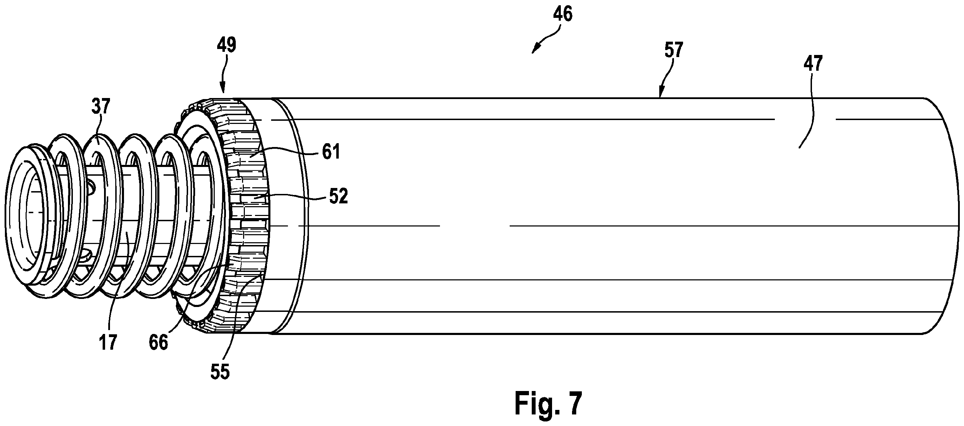

Die ersten beiden Ausführungsbeispiele gemäß den Fig. 5 und 7 zeigen als axiale Nuten an einer Außenseite des Steuerelementes 48,49 als Steuerdurchlässe 51,52. Die axialen Nuten bieten den Vorteil, dass eine definierte Führung des Dichtelements 5 auf der Außenseite 57 des Kolbens 46 gewährleistet ist.

Dabei sieht das erste Ausführungsbeispiel vor, dass die Steuerdurchlässe 51 als Zwischenräume von Rippen 60 ausgebildet sind, welche auf einem Ringkörper 63 angeordnet sind. Das Steuerelement 48 greift mit seinem Ringkörper 63 in die Außennut 54 ein, wie aus Fig. 5 deutlich hervorgeht.

Gemäß dem zweiten Ausführungsbeispiel, bei welchem das Steuerelement 49 als Wellenring vorgesehen ist, bilden Zwischenräume von nach außen gerichteten Rippen 61 die Steuerdurchlässe 52 und nach innen gerichtete Rippen 64 greifen in die Außennut 54 zur Befestigung ein.

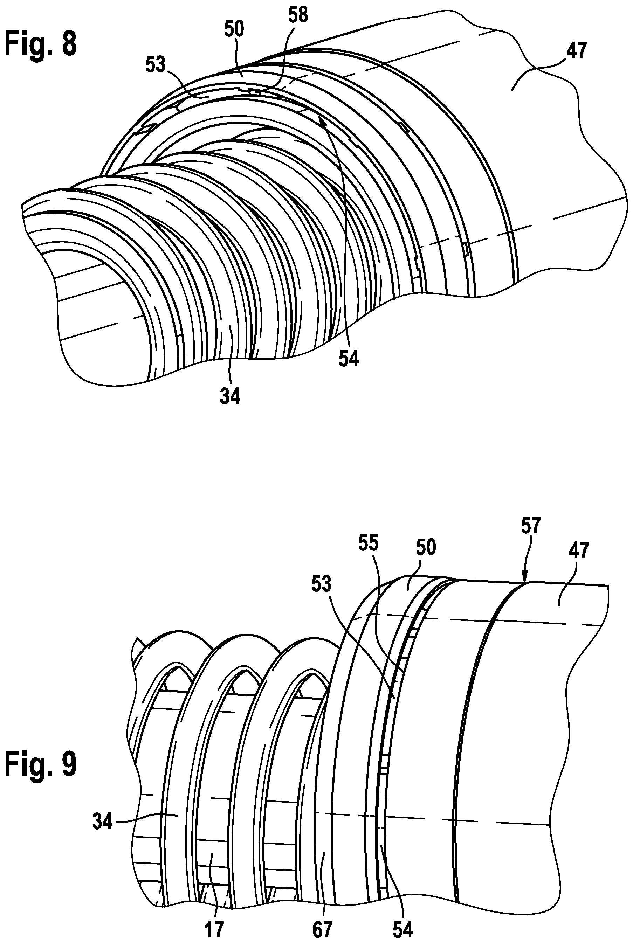

Dagegen sieht das dritte Ausführungsbeispiel gemäß Fig. 8 und 9 alternativ vor, dass die Steuerdurchlässe 53 als Zwischenräume zwischen Rippen 58 vorgesehen sind, welche in die Außennut 54 eingreifen. Fig. 10 und 11 zeigen das Steuerelement 50 des dritten Ausführungsbeispiels in einer räumlichen Darstellung, wobei Fig. 11 ein vergrößerter Ausschnitt zu entnehmen ist. Hieraus ist deutlich zu erkennen, dass die Rippen 58 an einer Innenseite 59 des Steuerelementes 50 vorgesehen sind und die Rippen 58 an der der Steuerkante 55 zugewandten Seite des Steuerelementes 50 in axialer Richtung über das Steuerelement 50 überstehen. Es kann dadurch ein Anliegen des Steuerelementes 50 an der Seitenwand 56 der Außennut 54 verhindert werden. Gleichzeitig ermöglichen das Überstehen der Rippen 58 und die Zwischenräume der Rippen 58 einen größtmöglichen Durchflussquerschnitt ohne Einschränkung der Stabilität des Grundkörpers 47.

Ist die Außennut 54 im Bereich eines reduzierten Durchmessers des Grundkörpers 47 vorgesehen, wie beispielsweise aus den Fig. 3, 7 und 8 ersichtlich ist, ergibt sich als Vorteil des nun anfänglich größeren Spalts zwischen dem Kolben 46 und dem Gehäuse 2 sowohl ein geringerer Durchflusswiderstand für Fahrdynamik-Regelungssysteme als auch ein besseres Nachströmen bei Volumenmangel.

Weiter ist anzumerken, dass das Steuerelement 48,49,50 im montierten Zustand mit der Kolbenstirnseite abschließt, damit eine Anlage der Innendichtlippe 26 an der Außenseite 57 des Kolbens 46 gewährleistet werden kann. Hierzu können sich entweder die die Steuerungsdurchlässe 51,52 bildenden Rippen 60,61 an der Außenseite des Steuerelementes 48,49 oder ein Ringkörper 62, an dessen Innenseite die Rippen 58 angeordnet sind, bis zur Kolbenstirnseite des Grundkörpers 47 erstrecken, wobei das Steuerelement 48,49,50 an der Kolbenstirnseite eine Schräge 65,66,67 aufweist, welche die Montage des Kolbens 46 vereinfacht.

### Bezugszeichenliste

- 1: Hauptzylinder
- 2: Gehäuse
- 3: Kolben
- 4: Kolben
- 5: Dichtelement
- 6: Dichtelement
- 7: Druckraum
- 8: Druckraum
- 9: Steuerdurchlass
- 10: Steuerdurchlass
- 11: Nachlaufraum
- 12: Nachlaufraum
- 13: Innenseite
- 14: Innenseite
- 15: Innennut
- 16: Innennut
- 17: Hülse
- 18: Hülse
- 19: Kragen
- 20: Kragen
- 21: Wandung
- 22: Wandung
- 23: Ringnut
- 24: Ringnut
- 26: Innendichtlippe
- 27: Innendichtlippe
- 28: Außendichtlippe
- 29: Außendichtlippe
- 30: Außenseite
- 31: Außenseite
- 32: Druckmittelkanal
- 33: Druckmittelkanal
- 34: Druckfeder
- 35: Druckfeder
- 36: Seite
- 37: Seite
- 38: Zapfen
- 39: Zapfen
- 40: Ende
- 41: Ende
- 42: Anschlag
- 43: Anschlag
- 44: Kragen
- 45: Kragen
- 46: Kolben
- 47: Grundkörper
- 48: Steuerelement
- 49: Steuerelement
- 50: Steuerelement
- 51: Steuerdurchlass
- 52: Steuerdurchlass
- 53: Steuerdurchlass
- 54: Außennut
- 55: Steuerkante
- 56: Seitenwand
- 57: Außenseite
- 58: Rippe
- 59: Innenseite
- 60: Rippe
- 61: Rippe
- 62: Ringkörper
- 63: Ringkörper
- 64: Rippe
- 65: Schräge
- 66: Schräge
- 67: Schräge

- A: Betätigungsrichtung

## Patentansprüche

1. Hauptzylinder, insbesondere für ein geregeltes Bremssystem, mit wenigstens einem, in einem Gehäuse (2) verschiebbaren Kolben (46), der mittels eines, in einer Ringnut (23,24) des Gehäuses (2) angeordneten Dichtelementes (5,6) gegenüber einem Druckraum (7,8) abgedichtet ist, welcher durch im Kolben (46) ausgebildete Steuerdurchlässe (51;52;53) mit einem drucklosen Nachlaufraum (11,12) verbindbar ist, der Kolben (46) wenigstens zweiteilig mit einem Grundkörper (47) und einem ringförmigen Steuerelement (48;49;50) ausgebildet ist, wobei in dem Steuerelement (48;49;50) die Steuerdurchlässe (51;52;53) vorgesehen sind, **dadurch gekennzeichnet, dass** die Steuerdurchlässe (51;52;53) eine parallel zu einer Kolbenstirnseite ausgebildete Steuerkante (55) aufweisen, welche am Grundkörper (47) durch eine Seitenwand (56) einer Außennut (54) des Grundkörpers (47) und einer Außenseite (57) des Grundkörpers (47) ausgebildet ist.

2. Hauptzylinder nach Anspruch 1, **dadurch gekennzeichnet, dass** das ringförmige Steuerelement (48;49;50) in der Außennut (54) des Grundkörpers (47) angeordnet ist.

3. Hauptzylinder nach einem der vorangegangenen Ansprüche, **dadurch gekennzeichnet, dass** die Steuerdurchlässe (51;52) als axiale Nuten an einer Außenseite des Steuerelementes (48;49) vorgesehen sind.

4. Hauptzylinder nach einem der vorangegangenen Ansprüche 1 bis 2, **dadurch gekennzeichnet, dass** das Steuerelement (49) als Wellenring ausgebildet ist.

5. Hauptzylinder nach einem der vorangegangenen Ansprüche 1 bis 4, **dadurch gekennzeichnet, dass** die Steuerdurchlässe (53) als Zwischenräume zwischen Rippen (58) an einer Innenseite (59) des Steuerelementes (50) vorgesehen sind, wobei die Rippen (58) an der der Steuerkante (55) zugewandten Seite des Steuerelementes (50) in axialer Richtung über das Steuerelement(50) überstehen.

6. Hauptzylinder nach einem der vorangegangenen Ansprüche, **dadurch gekennzeichnet, dass** der Grundkörper (47) als Dreh- oder Fließpressteil vorgesehen ist.

7. Hauptzylinder nach einem der vorangegangenen Ansprüche, **dadurch gekennzeichnet, dass** der Grundkörper (47) aus Aluminium ausgebildet ist.

8. Hauptzylinder nach einem der vorangegangenen Ansprüche, **dadurch gekennzeichnet, dass** das Steuerelement (51;52;53) als reversibel verformbares Formteil vorgesehen ist, welches durch Aufweiten auf dem Grundkörper (47) montierbar ist.

9. Hauptzylinder nach einem der vorangegangenen Ansprüche, **dadurch gekennzeichnet, dass** das Steuerelement (48;50) aus Kunststoff ausgebildet ist.

10. Hauptzylinder nach einem der vorangegangenen Ansprüche 1 bis 8, **dadurch gekennzeichnet, dass** das Steuerelement (49) aus federndem Blech ausgebildet ist.

11. Hauptzylinder nach einem der vorangegangenen Ansprüche 2 bis 10, **dadurch gekennzeichnet, dass** die Außennut (54) im Bereich eines reduzierten Durchmessers des Grundkörpers (47) vorgesehen ist.

## Claims

1. Master cylinder, in particular for a controlled brake system, comprising at least one piston (46) which is displaceable in a housing (2) and is sealed with respect to a pressure chamber (7, 8) by means of a sealing element (5, 6) arranged in an annular groove (23, 24) of the housing (2), which pressure chamber (7, 8) is connectable to an unpressurized supply chamber (11, 12) by control passages (51; 52; 53) formed in the piston (46), the piston (46) is formed in at least two parts, comprising a main body (47) and an annular control element (48; 49; 50), the control passages (51; 52; 53) being provided in the control element (48; 49; 50) **characterized in that** the control passages (51; 52; 53) have a control edge (55) formed parallel to an end face of the piston, which control edge (55) is formed on the main body (47) by a side wall (56) of an external groove (54) of the main body (47) and an outer side (57) of the main body (47).

2. Master cylinder according to Claim 1, **characterized in that** the annular control element (48; 49; 50) is arranged in the external groove (54) of the main body (47).

3. Master cylinder according to any one of the preceding claims, **characterized in that** the control passages (51; 52) are provided as axial grooves on an outer side of the control element (48; 49).

4. Master cylinder according to any one of the preceding Claims 1 to 2, **characterized in that** the control element (49) is in the form of a corrugated ring.

5. Master cylinder according to any one of the preceding Claims 1 to 4, **characterized in that** the control passages (53) are provided as gaps between ribs (58) on an inner side (59) of the control element (50), the ribs (58) projecting axially beyond the control element (50) on the side of the control element (50) oriented towards the control edge (55).

6. Master cylinder according to any one of the preceding claims, **characterized in that** the main body (47) is provided as a turned or extruded part.

7. Master cylinder according to any one of the preceding claims, **characterized in that** the main body (47) is made of aluminum.

8. Master cylinder according to any one of the preceding claims, **characterized in that** the control element (51; 52; 53) is provided as a reversibly deformable preform which can be expansion-fitted to the main body (47).

9. Master cylinder according to any one of the preceding claims, **characterized in that** the control element (48; 50) is made of plastics material.

10. Master cylinder according to any one of the preceding Claims 1 to 8, **characterized in that** the control element (49) is made of resilient sheet metal.

11. Master cylinder according to any one of the preceding Claims 2 to 10, **characterized in that** the external groove (54) is provided in the region of a reduced diameter of the main body (47).

## Revendications

1. Maître-cylindre, en particulier pour un système de freinage commandé, avec au moins un piston (46) déplaçable dans un boîtier (2), qui est étanche par rapport à une chambre de pression (7, 8) au moyen d'un élément d'étanchéité (5, 6) disposé dans une gorge annulaire (23, 24) du boîtier (2), et qui peut être mise en communication avec une chambre de compensation sans pression (11, 12) par des passages de commande (51 ; 52 ; 53) formés dans le piston (46), le piston (46) est réalisé en au moins deux parties avec un corps de base (47) et un élément de commande annulaire (48 ; 49 ; 50), dans lequel les passages de commande (51 ; 52 ; 53) sont prévus dans l'élément de commande (48 ; 49 ; 50), **caractérisé en ce que** les passages de commande (51 ; 52 ; 53) présentent une arête de commande (55) formée parallèlement à un côté frontal du piston, et qui est formée au niveau du corps de base (47) par une paroi latérale (56) d'une rainure extérieure (54) du corps de base (47) et un côté extérieur (57) du corps de base (47).

2. Maître-cylindre selon la revendication 1, **caractérisé en ce que** l'élément de commande annulaire (48 ; 49 ; 50) est disposé dans la rainure extérieure (54) du corps de base (47).

3. Maître-cylindre selon l'une quelconque des revendications précédentes, **caractérisé en ce que** les passages de commande (51 ; 52) sont prévus sous forme de rainures axiales sur un côté extérieur de l'élément de commande (48 ; 49).

4. Maître-cylindre selon l'une quelconque des revendications précédentes 1 à 2, **caractérisé en ce que** l'élément de commande (49) est réalisé sous la forme d'une bague d'arbre.

5. Maître-cylindre selon l'une quelconque des revendications précédentes 1 à 4, **caractérisé en ce que** les passages de commande (53) sont prévus sous la forme de chambres intermédiaires entre des nervures (58) sur un côté intérieur (59) de l'élément de commande (50), dans lequel les nervures (58) sont saillantes en direction axiale au-dessus de l'élément de commande (50) sur le côté de l'élément de commande (50) tourné vers l'arête de commande (55).

6. Maître-cylindre selon l'une quelconque des revendications précédentes, **caractérisé en ce que** le corps de base (47) est prévu sous forme de pièce tournée ou extrudée.

7. Maître-cylindre selon l'une quelconque des revendications précédentes, **caractérisé en ce que** le corps de base (47) est réalisé en aluminium.

8. Maître-cylindre selon l'une quelconque des revendications précédentes, **caractérisé en ce que** l'élément de commande (51 ; 52 ; 53) est prévu sous la forme d'une pièce moulée déformable de façon réversible, qui peut être montée par élargissement sur le corps de base (47).

9. Maître-cylindre selon l'une quelconque des revendications précédentes, **caractérisé en ce que** l'élément de commande (48 ; 50) est réalisé en matière plastique.

10. Maître-cylindre selon l'une quelconque des revendications précédentes 1 à 8, **caractérisé en ce que** l'élément de commande (49) est réalisé en tôle élastique.

11. Maître-cylindre selon l'une quelconque des revendications précédentes 2 à 10, **caractérisé en ce que** la rainure annulaire (54) est prévue dans la région d'un diamètre réduit du corps de base (47).
